# DEMANDE DE BREVET EUROPEEN

(11) **EP 3 059 065 A1**
(43) Date de publication de la demande: **24.08.2016**
(21) Numéro de dépôt: 16156351.5
(22) Date de dépôt: 18.02.2016
(51) Int. Cl.: B29C 37/02

(54) **DISPOSITIF D'ÉBAVURAGE D'UNE PIÈCE AYANT UN EXCÈS DE MATIÈRE LOCALISÉ**

(30) Priorité: 18.02.2015 FR 1551366
(71) Demandeur: Faurecia Bloc Avant, 92000 Nanterre (FR)
(72) Inventeur: PERRONNE, Valentin, 70200 LES AYNANS (FR); IMBERT, Didier, 25460 ETUPES (FR)
(74) Mandataire: Lavoix

(57) **Abrégé**

L'invention concerne un dispositif d'ébavurage d'une pièce (10) ayant un excès de matière localisé (12). Le dispositif (22) comprend un outil (24), l'outil (24) étant destiné à être placé contre l'excès de matière (12) avec contact.

L'outil (24) comprend une face de contact (26) de forme telle que le contact entre l'outil (24) et la pièce (10) est linéaire et le dispositif (22) comprend un dispositif de chauffage (30) de la face de contact (26) de l'outil (24).

## Description

La présente invention concerne un dispositif d'ébavurage d'une pièce ayant un excès de matière localisé, le dispositif comprenant un outil, l'outil étant destiné à être placé contre l'excès de matière avec contact.

L'invention concerne également un procédé d'ébavurage, mettant en oeuvre le dispositif d'ébavurage.

Des dispositifs du type précité sont connus, notamment du document DE 102008060625. Le document décrit un procédé de refonte d'une bavure sur une pièce moulée par injection. La bavure est chauffée par une soufflerie d'air chaud et lissée par un rouleau qui se déplace en rotation le long de la bavure.

Cependant, la soufflerie étant indépendante du rouleau, il peut y avoir un décalage entre la zone chauffée et la zone de déplacement du rouleau. La zone présentant la bavure n'est donc pas correctement chauffée au moment où le rouleau passe dessus, ce qui entraîne que la zone n'est pas assez malléable pour que le dispositif puisse faire disparaître la bavure. Ainsi ce procédé ne permet pas alors d'enlever l'ensemble de la bavure.

De plus, le procédé est adapté pour supprimer une bavure. Cependant, une pièce moulée par injection peut présenter d'autres défauts, comme une ligne de joint ou un décalage de plan de joint dus à la structure du moule, que la solution du document ne propose pas de résoudre. Par exemple, le rouleau se déplace en rotation : dans le cas d'un décalage de plan de joint, un rouleau en rotation ne permet pas de supprimer l'excès de matière.

Un but de l'invention est donc de fournir un dispositif efficace pour supprimer un excès de matière sur une pièce, et le procédé associé.

A cet effet, l'invention a pour objet un dispositif d'ébavurage d'une pièce comprenant un outil caractérisé en ce qu'il comprend une face de contact de forme telle que le contact entre l'outil et la pièce est linéaire et le dispositif comprend un dispositif de chauffage de la face de contact de l'outil.

L'utilisation d'un tel dispositif permet de repousser une partie de l'excès de matière afin de le répartir sur la surface de la pièce et ainsi supprimer ledit excès.

Selon des modes de réalisation particuliers de l'invention, le dispositif présente l'une ou plusieurs caractéristiques suivantes, prise(s) isolément ou suivant toute(s) combinaison(s) techniquement possible(s) :
- l'outil s'étend principalement selon un axe principal, la face de contact restant fixe par rapport à son axe principal,
- le dispositif comprend un système de guidage manuel ou automatisé ; et
- la zone de contact est au creux d'une gorge ou d'une rainure en V de l'outil.

L'invention a en outre pour objet un procédé d'ébavurage d'une pièce ayant un excès de matière localisé, comprenant les étapes suivantes :
- fourniture d'un dispositif tel que défini ci-dessus,
- chauffage de la face de contact,
- application de la face de contact de l'outil contre l'excès de matière, le contact étant linéaire, et
- déplacement de l'outil le long de l'excès de matière, de sorte que la face de contact chauffée agit sur l'excès de matière afin de supprimer ledit excès.

Selon des modes de réalisation particuliers de l'invention, le procédé présente l'une ou plusieurs caractéristiques suivantes, prise(s) isolément ou suivant toute(s) combinaison(s) techniquement possible(s) :
- l'outil s'étend principalement selon un axe principal et la pièce localement selon un autre axe principal, l'outil étant appliqué contre la pièce tel que l'axe principal de l'outil et l'axe de la pièce sont sensiblement perpendiculaires ;
- l'outil s'étend principalement selon un axe principal, l'outil restant fixe par rapport à son axe principal, la face de contact de l'outil en contact avec la pièce restant sensiblement au même endroit de l'outil au cours du procédé ;
- la pièce est en matière thermoplastique ;
- l'outil est chauffé à température permettant à la matière de la pièce de passer à un état visqueux ;
- l'outil exerce sur la pièce une pression suffisante pour écraser et repousser la matière de la pièce dans son état visqueux ; et
- l'outil s'étend principalement selon un axe principal, le contact linéaire étant perpendiculaire à l'axe principal de l'outil.

D'autres caractéristiques et avantages de l'invention apparaîtront à la lecture de la description qui va suivre, donnée uniquement à titre d'exemple et faite en se référant aux dessins annexés, sur lesquels :
- la figure 1 est une vue en coupe schématique représentant une pièce ayant un excès de matière, dans un moule d'injection,
- la figure 2 est une vue schématique d'un mode de réalisation du dispositif de l'invention en contact avec la pièce de la figure 1,
- les figures 3 à 5 sont des vues schématiques d'étapes du procédé de l'invention.

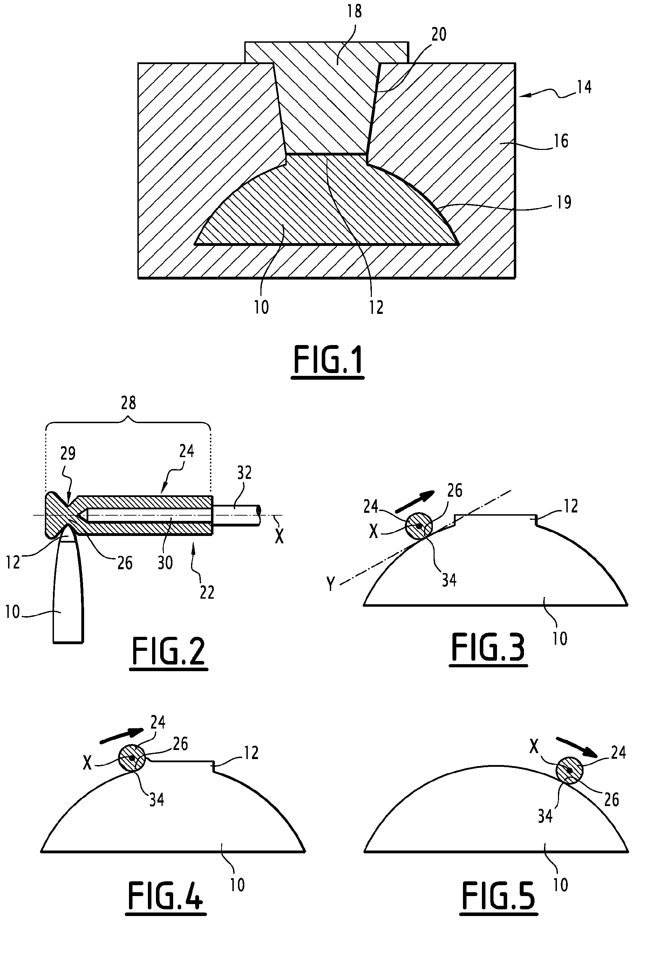

La figure 1 représente une pièce 10, ayant un excès de matière 12 qui peut être supprimé grâce au dispositif de l'invention, dans son moule d'injection 14.

La pièce 10 est par exemple en matière thermoplastique. La pièce 10 est par exemple une pièce d'un véhicule automobile destinée à être située sur l'extérieur, du type becquet ou autre.

Le moule d'injection 14 comprend deux parties : une matrice 16 et un poinçon 18, définissant entre eux une cavité d'injection 19 présentant la forme de la pièce 10 à réaliser. La séparation entre ces deux parties est appelée le plan de joint 20.

Lorsque la pièce 10 est moulée, le poinçon 18 peut être légèrement décalé par rapport à la matrice 16, tel qu'il se forme un excès de matière 12 sur la pièce 10 au niveau de la zone de jonction entre la matrice 16 et le poinçon 18. Cet excès de matière 12 s'appelle un décalage de plan de joint.

De plus, y compris lorsque la matrice 16 et le poinçon 18 sont alignés, de la matière peut remonter le long du plan de joint 20, défini par les surfaces appliquées l'une contre l'autre de la matrice 16 et du poinçon 18. La pièce comporte alors une trace nommée ligne de joint (non représenté).

Le dispositif et le procédé de l'invention permettent de supprimer des excès de matière localisés de pièces en sortie de moule, notamment des décalages de plan de joint et/ou des lignes de joint, ce qui sera nommé par la suite l'ébavurage. Le décalage de plan de joint est, par exemple, d'une taille inférieure à 2 mm.

Le dispositif et le procédé de l'invention s'applique également à des pièces qui n'ont pas été moulées par injection, mais qui présente des défauts d'aspect dus à une mauvaise répartition de la matière de la pièce.

Le dispositif 22, représenté à la figure 2, comprend un outil 24.

L'outil 24 est réalisé selon la forme de la pièce 10 sur lequel se situe l'excès de matière 12. L'outil comprend une face de contact 26, destinée à être appliquée contre l'excès de matière 12 de la pièce 10. La forme de la face de contact 26 est complémentaire de la forme voulue de la pièce 10 dans la région où se situe le défaut d'aspect.

L'outil 24 s'étend, par exemple, suivant un axe central principal X. Une partie 28 de l'outil 24, comprenant la face de contact 26, est sensiblement un cylindre en dehors de la face de contact 26. La partie 28 de l'outil est une pièce de révolution autour de l'axe principal X. La partie 28 comprend par exemple une gorge 29 ou une rainure en V de révolution. La face de contact 26 est située au creux de la gorge 29 ou de la rainure en V de révolution. La face de contact 26 ne pivote pas autour de l'axe principal X.

L'écartement et la profondeur de la gorge 29 ou de la rainure sont choisis en fonction de la géométrie de la zone de la pièce 10 comprenant l'excès de matière 12 sur laquelle est destiné à être appliqué l'outil.

Alternativement, la partie 28 de l'outil est sensiblement un cylindre en dehors de la face de contact 26, mais n'est pas une pièce de révolution. La partie 28 comprend par exemple une rainure en V qui ne fait pas le tour de l'outil, la face de contact 26 étant située au creux de la rainure en V. La face de contact 26 ne pivote pas autour de l'axe principal X.

Le dispositif 22 comprend en outre un dispositif de chauffage 30. Le dispositif de chauffage 30 est par exemple disposé dans l'outil 24. Le dispositif de chauffage 30 permet de chauffer au moins la face de contact 26, afin d'amener localement la matière de la pièce 10 à un état visqueux lorsque l'outil 24 est appliqué contre la pièce 10. Le dispositif de chauffage 30 est, par exemple, une résistance apte à chauffer la face de contact 26 métallique par conduction thermique.

Le dispositif de chauffage 30 chauffe, par exemple, tout ou partie de l'outil 24, comprenant la face de contact 26.

D'après un mode de réalisation, le dispositif 22 comprend un système de guidage 32. Le système de guidage 32 est apte à déplacer l'outil 24 le long de la pièce 10 de sorte à faire passer la face de contact 26 dans toute la région de la pièce comprenant un défaut d'aspect. Le système de guidage 32 peut être manuel ou automatisé.

D'après un exemple de réalisation, plusieurs outils du type décrit sont montés sur une tête de robot (non représenté). Cela permet de travailler sur des pièces de géométries différentes ou différentes parties d'une même pièce de géométries variées avec le même robot.

Alternativement, l'outil comprend plusieurs zones de contact 26. Par exemple, la partie 28 de l'outil 24, comprenant les faces de contact 26, est sensiblement un cylindre en dehors des faces de contact 26. La partie 28 de l'outil est une pièce de révolution autour de l'axe X. La partie 28 comprend par exemple une ou plusieurs gorges 29 et/ou une ou plusieurs rainures en V de révolution, les faces de contact 26 étant situées au creux de chacune. Les faces de contact 26 ne pivotent pas autour de l'axe principal X. Les faces de contact 26 sont de géométries différentes, cela permettant de travailler sur des pièces de géométries différentes ou différentes parties d'une même pièce de géométries variées.

Un procédé d'ébavurage, permettant d'utiliser le dispositif décrit précédemment, est maintenant décrit.

La face de contact 26 est chauffée par le dispositif de chauffage 30.

Comme représentée à la figure 2, la face de contact 26 est appliquée contre la pièce 10 en une zone de contact 34, comprenant un défaut d'aspect. L'outil 24 est de forme telle que la zone de contact 34 est une ligne.

La ligne formée par la zone de contact 34 est perpendiculaire à l'axe principal X de l'outil, c'est-à-dire que le contact linéaire entre la pièce 10 et l'outil 24 se fait perpendiculairement à l'axe principal X de l'outil 34.

L'outil 24 est appliqué directement au niveau de l'excès de matière 12 de la pièce 10. L'outil 24 vient appliquer une pression, suffisante pour écraser et repousser la matière de la pièce 10 dans son état visqueux, sur la pièce 10.

Lorsque la pièce s'étend localement principalement suivant un axe principal Y, l'outil 24 est appliqué sur la pièce, tel que les axes X et Y soient perpendiculaires.

Le contact linéaire est alors établi suivant l'axe principal Y de la pièce 10.

Comme représenté sur les figures 3 à 5, l'outil 24 est alors déplacé par le système de guidage 32 le long de l'excès de matière 12, tel que l'outil 24 continue d'appliquer sensiblement la même pression sur la pièce 10. L'outil 24 est déplacé à une vitesse choisie pour que le matériau de l'excès de matière 12 ait le temps de devenir malléable sous l'effet de la température de la face de contact 26.

L'outil 24 est déplacé le long de l'excès de matière 12 et est écarté de la pièce 10 après l'excès de matière 12 pour répartir la matière sur des endroits de la pièce 10 n'ayant pas d'excès de matière 12.

Alternativement, l'outil 24 est écarté avant d'avoir parcouru l'ensemble de l'excès de matière 12, puis la face de contact 26 est de nouveau appliquée contre la pièce 10 et parcourt le reste de l'excès de matière 12 non parcouru la première fois.

Alternativement, l'outil 24 est appliqué contre la pièce 10 en dehors de l'excès de matière 12. Dans ce cas, l'outil 24 est ensuite déplacé en direction de l'excès de matière 12, puis parcourt l'excès de matière 12.

D'après un mode de réalisation, le système de guidage 32 connaît le profil de la pièce 10 et guide automatiquement l'outil 24 le long de la pièce 10.

La face de contact 26 reste sensiblement la même lors du déplacement de l'outil 24. Tout ou partie de l'outil 24, comprenant la face de contact 26, ne pivote pas autour de son axe X et suit le contour de la pièce 10. Dans le cadre d'un excès de matière 12 dû à une ligne de joint, l'outil 24 suit la ligne de joint.

Cette étape permet de supprimer l'excès de matière localisé 12 en déplaçant la matière de l'excès de matière 12 de la pièce 10 et en la répartissant sur l'ensemble ou une partie de la pièce 10.

La température à laquelle est chauffée la face de contact 26, la vitesse de déplacement de l'outil 24 et la pression que l'outil exerce sur la pièce dépendent de la taille de l'excès de matière 12 à supprimer et du matériau de la pièce 10. Ces paramètres sont choisis pour que le matériau de la pièce 10 devienne malléable et soit apte à être réparti sur la surface de la pièce 10, de sorte que l'outil 24 redessine la pièce, pour qu'elle ait la forme voulue, dans la zone où l'outil 24 a été appliqué.

La face de contact 26 est chauffée continument par le dispositif de chauffage 30 pendant le procédé et/ou préchauffée à une certaine température avant application contre la pièce 10 puis maintenue à une température supérieure à cette température.

Le procédé permet d'obtenir facilement une pièce ne présentant pas de défaut d'aspect, ce qui en améliore la qualité.

## Revendications

1. Dispositif (22) d'ébavurage d'une pièce (10) ayant un excès de matière localisé (12), le dispositif (22) comprenant un outil (24), l'outil (24) étant destiné à être placé contre l'excès de matière (12) avec contact,
**caractérisé en ce que** l'outil (24) comprend une face de contact (26) de forme telle que le contact entre l'outil (24) et la pièce (10) est linéaire et le dispositif (22) comprend un dispositif de chauffage (30) de la face de contact (26) de l'outil (24).

2. Dispositif selon la revendication 1, **caractérisé en ce que** l'outil (24) s'étend principalement selon un axe principal (X), la face de contact (26) restant fixe par rapport à son axe principal (X).

3. Dispositif selon l'une quelconque des revendications précédentes, **caractérisé en ce que** le dispositif (22) comprend un système de guidage (32) manuel ou automatisé.

4. Dispositif selon l'une quelconque des revendications précédentes, **caractérisé en ce que** la zone de contact (26) est au creux d'une gorge (29) ou d'une rainure en V de l'outil (24).

5. Procédé d'ébavurage d'une pièce (10) ayant un excès de matière localisé (12), comprenant les étapes suivantes de :
- fourniture d'un dispositif (22) selon l'une quelconque des revendications précédentes,
- chauffage de la face de contact (26),
- application de la face de contact (26) de l'outil (24) contre l'excès de matière (12), le contact étant linéaire,
- déplacement de l'outil (24) le long de l'excès de matière (12), de sorte que la face de contact (26) chauffée agit sur l'excès de matière (12) afin de supprimer ledit excès (12).

6. Procédé selon la revendication 5, **caractérisé en ce que** l'outil (24) s'étend principalement selon un axe principal (X) et la pièce (10) localement selon un autre axe principal (Y), l'outil (24) étant appliqué contre la pièce (10) tel que l'axe principal (X) de l'outil (24) et l'axe (Y) de la pièce (10) sont sensiblement perpendiculaires.

7. Procédé selon l'une quelconque des revendications 5 ou 6, **caractérisé en ce que** l'outil (24) s'étend principalement selon un axe principal (X), l'outil (24) restant fixe par rapport à son axe principal (X), la face de contact (26) de l'outil (24) en contact avec la pièce (10) restant sensiblement au même endroit de l'outil (24) au cours du procédé.

8. Procédé selon l'une quelconque des revendications 5 à 7, **caractérisé en ce que** la pièce (10) est en matière thermoplastique.

9. Procédé selon l'une quelconque des revendications 5 à 8, **caractérisé en ce que** l'outil (24) est chauffé à température permettant à la matière de la pièce (10) de passer à un état visqueux.

10. Procédé selon la revendication 9, **caractérisé en ce que** l'outil (24) exerce sur la pièce (10) une pression suffisante pour écraser et repousser la matière de la pièce (10) dans son état visqueux.

11. Procédé selon l'une quelconque des revendications 5 à 10, **caractérisé en ce que** l'outil (24) s'étend principalement selon un axe principal (X), le contact linéaire étant perpendiculaire à l'axe principal (X) de l'outil (24).
